(19) Europäisches Patentamt
European Patent Office
Office européen des brevets

(11) Publication number: 0 041 306 B1

(12) # EUROPEAN PATENT SPECIFICATION

(45) Date of publication of patent specification: 14.03.84

(51) Int. Cl.³: C 07 F 1/04

(21) Application number: 81200596.5

(22) Date of filing: 01.06.81

(54) **Solutions of sodium alkyls in hydrocarbons and process for preparing said solutions.**

(30) Priority: 02.06.80 US 155361

(43) Date of publication of application:
09.12.81 Bulletin 81/49

(45) Publication of the grant of the patent:
14.03.84 Bulletin 84/11

(84) Designated Contracting States:
AT BE DE FR GB IT NL SE

(56) References cited:
US - A - 2 714 578
US - A - 3 856 768

(73) Proprietor: TEXAS ALKYLS, INC.
Deer Park, Texas 77536 (US)

(72) Inventor: Eidt, Scott Hubert
613 Baywood Drive
Seabrook, Texas 77586 (US)
Inventor: Malpass, Dennis Benedict
10320 Rockyhollow Road
LaPorte, Texas 77571 (US)

(74) Representative: Urbanus, Henricus Maria, Ir. et al,
c/o Vereenigde Octrooibureaux Nieuwe Parklaan 107
NL-2587 BP 's-Gravenhage (NL)

EP 0 041 306 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Solutions of sodium alkyls in hydrocarbons and process for preparing said solutions

This invention relates to hydrocarbon-soluble sodium alkyls. In particular, this invention relates to solutions of alkylsodium compounds in aliphatic or alicyclic hydrocarbon solvents.

Alkylsodium compounds are known for a variety of uses in chemical technology. As cocatalysts with halides of metals of Groups IV to VI of the periodic table (see *Handbook of Chemistry and Physics*, 52d ed., The Chemical Rubber Co., Cleveland, Ohio, 1977), alkylsodium compounds are useful in the polymerization of olefins such as ethylene, propylene, butadiene, and isoprene. They have also been used both alone and as cocatalysts in the polymerization of acrylates, acrylonitriles, lactones, and other monomers. Alkylsodium compounds are also useful as alkylating agents and metalating agents since they are more reactive than Grignard reagents.

According to US—A—3,856,768 complexes of alkylsodium compounds with high molecular weight cyclic ethers, known as "crown ethers", are used as catalysts in the polymerization of conjugated dienes.

Sodium alkyls are highly reactive, high-melting solids that are generally insoluble in hydrocarbon solvents. It is to this reactivity that sodium alkyls owe their broad utility. Unfortunately, water, carbon dioxide and oxygen, common components of atmospheric air, are included among the many materials that react with sodium alkyls. Thus, sodium alkyls must be handled in an inert atmosphere, preferably under a gaseous blanket of nitrogen or argon. Under such conditions, the compounds can be handled as dry powders. Preferably, however, they are handled in suspension or in solution in an inert hydrocarbon liquid, in order to improve ease of handling and minimize the chances of contamination. Hydrocarbons are preferred over other liquid solvents, particularly ethers since, although useful as solvents for less reactive organometallic compounds, ethers are cleaved by sodium alkyls to form sodium alkoxides and other products.

Sodium alkyls are most conveniently prepared by the reaction between sodium metal and an appropriate alkyl halide (cf. US—A—3,856,768, column 5, lines 20—22). However, the insolubility of the product makes recovery from the other solids in the product mixture difficult. In addition, insoluble sodium alkyls are inconvenient to transfer and handle since they are normally stored as suspensions in hydrocarbon solvents to enhance their stability. Furthermore, when used as catalyst or reagents, their solid form makes it difficult to control reaction rates. Clearly, it would be desirable to obtain sodium alkyls which are soluble in hydrocarbons and to be able to prepare solutions of said sodium alkyls in hydrocarbons directly from the reactants.

It has now been discovered that uncomplexed alkylsodium compounds of the formula

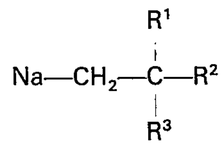

in which $R^1$ and $R^2$ are independently straight-chain $C_2$—$C_6$ alkyl and $R^3$ is hydrogen or straight-chain $C_1$—$C_3$ alkyl, are soluble in saturated aliphatic and alicyclic hydrocarbon solvents of from 5 to 20 carbon atoms.

Related to this discovery is the discovery that a hydrocarbon solution of an uncomplexed alkylsodium compound of the above formula can be prepared by reacting metallic sodium with an alkyl halide of the formula

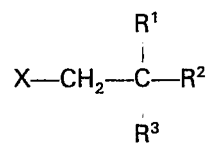

in which X is halogen, in the presence of a saturated aliphatic or cycloaliphatic hydrocarbon solvent of from 5 to 20 carbon atoms, followed by the removal of solids from the resulting reaction mixture.

The present invention resides in novel hydrocarbon solutions of the above-described alkylsodium compounds. Examples of such compounds are 2-ethylbutylsodium, 2-ethylpentylsodium 2-ethylhexylsodium, 2-ethylheptylsodium, 2-propylpentylsodium, 2-propylhexylsodium, 2-butylhexylsodium, 2-methyl-2-ethylbutylsodium, 2 - methyl - 2 - ethylhexylsodium, 2,2-diethylbutylsodium, and 2,2-diethylhexylsodium. Preferred alkylsodium compounds are those in which $R^1$ and $R^2$ are independently straight-chain $C_2$—$C_6$ alkyl and $R^3$ is hydrogen. Most preferred are those in which $R^1$ is ethyl, $R^2$ is straight-chain $C_2$—$C_6$ alkyl, and $R^3$ is hydrogen.

Suitable hydrocarbon solvents include aliphatic and alicyclic compounds of from 5 to 20 carbon atoms. The solvents must be saturated and can be either straight-chain or branched-chain configurations. Examples of aliphatic hydrocarbon solvents are n-pentane, isopentane, n-hexane, n-heptane, n-octane, isooctane, pentamethylheptane, and gasoline and other petroleum fractions. Examples of alicyclic hydrocarbon compounds are cyclopentane, cyclohexane, methylcyclohexane, methylcyclopentane, cycloheptane and cyclooctane. Preferred solvents are those containing 5 to 10 carbon atoms, inclusive.

The concentration of the alkylsodium compound in the solution is not critical and can vary

over a wide range. The solubility of the compound varies with temperature, however, and drops as the solution temperature is lowered. Once a portion of the alkylsodium compound has crystallized out of solution, it readily redissolves upon warming of the solution. Thus, cold temperature storage is not detrimental to the utility of the solution, since it can be readily restored to its homogeneous state. The preferred concentration of the alkylsodium compound is less than about 30% by weight. Most preferred solutions contain from 1% to 20% alkylsodium by weight.

The alkylsodium compound can be separately prepared by any of the known techniques for alkylsodium synthesis. Such techniques include metal exchange reactions such as the reaction between an alkyllithium compound and a sodium alkoxide, and metal displacement reactions such as the reaction between sodium metal and a dialkylmercury compound. Thus prepared, the alkylsodium compound is then combined with the solvent. Solubilization can be hastened by agitation and moderate heating. Excessive heating is to be avoided since decomposition of the alkylsodium compound is accelerated as the temperature is raised.

In a preferred method of preparation, finely divided metallic sodium is reacted with the appropriate alkyl halide by adding the latter to a dispersion of the sodium in the solvent desired for the ultimate solution. Suitable halides are chlorides, bromides, and iodides, with chlorides and bromides preferred, and chlorides particularly preferred. Two moles of sodium will be required per mole of alkyl halide, since the reaction occurs as follows:

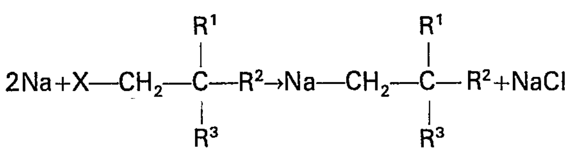

in which X, $R^1$, $R^2$, and $R^3$ are as defined above. In practice, it is preferred to use an excess of sodium, i.e., a quantity exceeding two moles of sodium per mole of alkyl halide. An excess of sodium will serve to minimize the occurrence of a Wurtz coupling reaction between the alkylsodium and the alkyl halide, and also provides an economic advantage in terms of the high cost of alkyl halides. The amount of excess sodium is not critical, although a minimum of 5% excess, i.e., an initial mole ratio of 2.1:1 (sodium:alkyl halide), is preferred.

The sodium used as a starting material is preferably in the finely divided state, with an average particle size on the order of 50 $\mu$m (microns) or less. A small particle size and high surface area are advantageous to the reaction since they serve to enhance the reaction rate and help to avoid long incubation periods at the start of the reaction. In order to initiate the reaction and maintain the reaction rate, it will be desirable to provide as much contact as possible between the powdered sodium and the alkyl halide. Although a small particle size will enhance this, agitation of the reaction mixture to keep the particles in suspension is also helpful.

The reaction does not have a critical temperature and can be operated over a wide temperature range. Alkylsodium compounds are subject to decomposition, however, and their instability increases with increasing temperature. Melting of the metallic sodium also occurs at high temperatures and is particularly undesirable since it sharply reduces the high surface area of the powder. A disadvantage of operating at very low temperatures, on the other hand, is that the solubility of the alkylsodium compound tends to drop as the temperature is lowered. The desired operating temperature will thus be governed by the concentration of the solution ultimately sought. It is preferred to dissolve as much of the alkylsodium product as possible since undissolved material inhibits the contact between the still unreacted alkyl halide and sodium, reducing the reaction rate. With these considerations in mind, the reaction is preferably run at a temperature from −20°C to 30°C. Since the reaction is exothermic, external cooling will normally be required to maintain the temperature within this range.

The product mixture produced by this reaction will contain a solid phase consisting of the by-product sodium halide, unreacted sodium, and possibly some alkylsodium in excess of the solubility limit at the temperature of the mixture. These solids can be removed from the reaction mixture by any conventional technique — for example: centrifuging, decanting, or filtration. The result will be a homogeneous solution of the alkylsodium compound in the aliphatic or alicyclic hydrocarbon solvent.

Sodium alkyls are pyrophoric substances, capable of spontaneous ignition upon contact with air. To prevent such ignition, and also to prevent oxidation of the metallic sodium, the reaction must be carried out in the absence of more than trace amounts of oxygen. Thus, the reaction is normally carried out in an atmosphere of inert gas such as nitrogen or argon. The reaction must also be conducted in the substantial absence of water, due to the susceptibility of the system components to decomposition in the presence of water.

The following Examples are offered as further illustration of the present invention. They are intended neither to define nor to limit the invention in any manner.

Example 1

This example demonstrates the preparation and solubility of 2-ethylhexylsodium.

A one-liter round-bottom four-necked flask with three indentations for improved agitation

and a Teflon®-covered magnetic stirrer bar was charged with a suspension of 25.6 grams (g) of sodium powder (particles approximately 10 microns in diameter) in 447 g of isopentane. Over a three-hour period with continuous stirring, 150.5 g of a 49.4 weight percent solution of 2-ethylhexyl chloride in isopentane was added to the flask. In molar terms, these quantities amount to 1.11 gram-atom of sodium and 0.50 mole of 2-ethylhexyl chloride, or 11% stoichiometric excess of sodium.

The addition of the 2-ethylhexyl chloride solution caused an exothermic reaction, and external cooling was applied to maintain the reaction flask contents at a temperature between 18°C and 27°C. The resulting mixture in the flask was a suspension, purple-black in color. When addition was complete, the suspension was cooled to 10°C, stirred for fifteen minutes, then filtered through a medium porosity fritted filter in a nitrogen-pressured funnel to yield a clear, pale orange filtrate. The purple residue remaining on the filter was then washed with three 50-ml portions of isopentane. The wash solutions were added to the filtrate, although a small amount of isopentane was lost through evaporation and entrainment in the nitrogen used to pressurize the filter funnel.

To analyze the solution for alkylsodium content, a portion of the solution was hydrolyzed in an excess of 0.1N hydrochloric acid and back titrated with 0.1N sodium hydroxide. The analysis revealed 0.655 milliequivalent of alkylsodium per gram of solution. This is equivalent to 8.92 weight percent of 2-ethylhexylsodium in solution. Based on the total filtrate weight of 601.3 g, this amounts to 53.6 g of 2-ethylhexylsodium in solution, a yield of 78.8% of the theoretical.

Example 2

This example demonstrates the preparation and solubility of 2-ethylbutylsodium.

Following the procedure of Example 1, 24.2 g (1.05 gram-atoms, 12% excess) of sodium was combined with 56.3 g (0.47 mole) of 2-ethylbutyl chloride. The resulting product was a 6.9 weight percent solution of 2-ethylbutylsodium in isopentane, corresponding to a dissolved product yield of 80.2% of the theoretical.

## Claims

1. A composition consisting of a homogeneous liquid solution of an uncomplexed alkylsodium compound of the formula

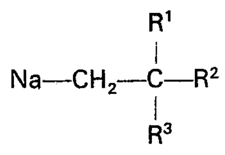

in which $R^1$ and $R^2$ are independently straight-chain $C_2$—$C_6$ alkyl and $R^3$ is hydrogen or straight-chain $C_1$—$C_3$ alkyl, in a saturated aliphatic or alicyclic hydrocarbon solvent of from 5 to 20 carbon atoms.

2. A composition consisting of a homogeneous liquid solution of an uncomplexed alkylsodium compound of the formula

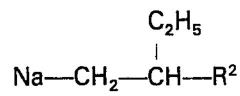

in which $R^2$ is a straight-chain $C_2$—$C_6$ alkyl in a saturated aliphatic or alicyclic hydrocarbon solvent of from 5 to 10 carbon atoms.

3. A composition according to claims 1 or 2 in which the concentration of said alkylsodium compound is from 1% to 20% by weight.

4. A process for the manufacture of a hydrocarbon solution of an uncomplexed alkylsodium compound which comprises

(a) reacting metallic sodium with an alkyl halide of the formula

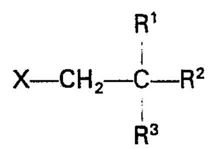

in which X is halogen, $R^1$ and $R^2$ are independently straight-chain $C_2$—$C_6$ alkyl and $R^3$ is hydrogen or straight-chain $C_1$—$C_3$ alkyl, in the presence of a saturated aliphatic or alicyclic hydrocarbon solvent of from 5 to 20 carbon atoms to produce a homogeneous liquid and solids, and

(b) separating said homogeneous liquid from said solids, both steps being conducted in the substantial absence of both moisture and oxygen.

5. A process for the manufacture of a hydrocarbon solution of an uncomplexed alkylsodium compound which comprises

(a) reacting metallic sodium with an alkyl halide of the formula

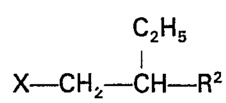

in which X is halogen and $R^2$ is straight-chain $C_2$—$C_6$ alkyl, in the presence of a saturated aliphatic or alicyclic hydrocarbon solvent of from 5 to 10 carbon atoms, to produce a homogeneous liquid and solids, and

(b) separating said homogeneous liquid from said solids, both steps being conducted in the substantial absence of both moisture and oxygen.

6. A process according to claims 4 or 5, in which X is chlorine.

7. A process according to claims 4 or 5, in

which the mole ratio of sodium to alkyl halide in step (a) is at least 2.1:1.

8. A process according to claims 4 or 5 in which the metallic sodium of step (a) is a finely divided powder with an average particle size of 50 $\mu$m (microns) or less.

9. A process according to claims 4 or 5, in which step (a) is conducted at a temperature between –20°C and 30°C.

**Patentansprüche**

1. Zusammensetzung bestehend aus einer homogenen, flüssigen Lösung einer nichtkomplexen Natriumalkylverbindung der Formel

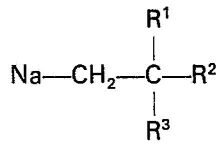

bei der $R^1$ und $R^2$ unabhängig geradkettige $C_2$—$C_6$-Alkyle und $R^3$ Wasserstoff oder ein geradkettiges $C_1$—$C_3$-Alkyl sind, in einem gesättigten aliphatischen oder alicyclischen Kohlenwasserstofflösungsmittel mit 5 bis 20 C-Atomen.

2. Zusammensetzung besteht aus einer homogenen flüssigen Lösung einer nichtkomplexen Natriumalkylverbindung der Formel

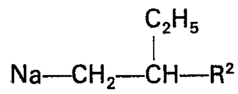

bei der $R^2$ ein geradkettiges $C_2$—$C_6$-Alkyl ist, in einem gesättigten aliphatischen oder alicyclischen Kohlenwasserstofflösungsmittel mit 5 bis 10 C-Atomen.

3. Zusammensetzung nach Anspruch 1 oder 2, bei der die Konzentration der Natriumalkylverbindung von 1 bis 20 Gew.% beträgt.

4. Ein Verfahren zur Herstellung einer Kohlenwasserstofflösung einer nichtkomplexen Natriumalkylverbindung, welches umfaßt:

a) Reagierenlassen von metallischem Natrium mit einem Alkylhalogenid der Formel

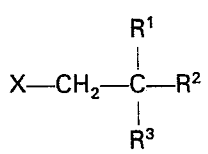

in der X ein Halogen, $R^1$ und $R^2$ unabhängig geradkettige $C_2$—$C_6$-Alkyle und $R^3$ Wasserstoff oder ein geradkettiges $C_1$—$C_3$-Alkyl sind, in Gegenwart eines gesättigten aliphatischen oder alicyclischen Wasserstofflösungsmittels mit 5 bis 20 C-Atomen zur Herstellung einer homogenen Flüssigkeit und von Feststoffen, und

b) Abtrennen der homogenen Flüssigkeit von den Feststoffen, wobei beide Schritte im wesentlichen in Abwesenheit sowohl von Feuchtigkeit als auch von Sauerstoff durchgeführt werden.

5. Ein Verfahren zur Herstellung einer Kohlenwasserstofflösung einer nichtkomplexen Natriumalkylverbindung, das umfaßt:

a) das Reagierenlassen von metallischem Natrium mit einem Alkylhalogenid der Formel

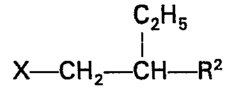

in der X ein Halogen und $R^2$ ein geradkettiges $C_2$—$C_6$-Alkyl sind, in Gegenwart eines gesättigten aliphatischen oder alicyclischen Kohlenwasserstofflösungsmittels mit 5 bis 10 C-Atomen, zur Erzeugung einer homogenen Flüssigkeit und von Feststoffen, und

b) das Abtrennen der homogenen Flüssigkeit von den Feststoffen, wobei beide Schritte im wesentlichen in Abwesenheit sowohl von Feuchtigkeit als auch von Sauerstoff durchgeführt werden.

6. Verfahren nach Anspruch 4 oder 5, bei dem X Chlor ist.

7. Verfahren nach Anspruch 4 oder 5, dadurch gekennzeichnet, daß das Molverhältnis von Natrium zu Alkylhalogenid in der Stufe (a) wenigstens 2,1:1 beträgt.

8. Verfahren nach Anspruch 4 oder 5, bei dem das metallische Natrium der Stufe (a) ein feines Pulver mit einer mittleren Teilchengröße von 50 $\mu$m (Micron) oder weniger ist.

9. Verfahren nach Anspruch 4 oder 5, bei dem die Stufe (a) bei einer Temperatur zwischen –20 und 30°C durchgeführt wird.

**Revendications**

1. Une composition comprenant une solution liquide homogène d'un composé d'alkylsodium non complexé de la formule

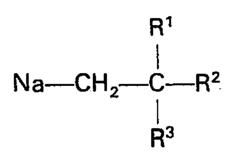

où $R^1$ et $R^2$ sont indépendamment $C_2$—$C_6$ alkyle à chaîne droite et $R^3$ est hydrogène ou $C_1$—$C_3$ alkyle à chaîne droite, dans un solvant d'hydrocarbure aliphatique ou alicyclique saturé de 5—20 atomes de carbone.

2. Une composition comprenant une solution liquide homogène d'un composé d'alkylsodium non complexé de la formule

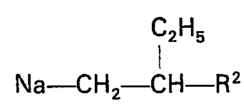

où $R^2$ est $C_2$—$C_6$ alkyle à chaîne droite dans un

solvant d'hydrocarbure aliphatique ou alicyclique saturé de 5—10 atomes de carbone.

3. Une composition selon les revendications 1 ou 2, dans laquelle la concentration de ce composé d'alkylsodium est de 1%—20% par poids.

4. Un procédé pour la fabrication d'une solution d'hydrocarbure d'un composé d'alkylsodium non complexé comprenant

(a) une réaction de sodium métallique avec un halogénure d'alkyle ayant la formule

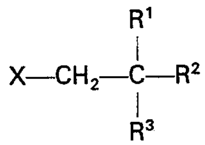

où X est halogène, $R^1$ et $R^2$ sont indépendamment $C_2$—$C_6$ alkyle à chaîne droite et $R^3$ est hydrogène ou $C_1$—$C_3$ alkyle à chaîne droite, dans la présence d'un solvant d'hydrocarbure aliphatique ou alicyclique saturé de 5—20 atomes de carbone pour produire un liquide homogène et des solides, et

(b) une séparation de ce liquide homogène de ces solides, les deux étapes étant effectuées dans l'absence substantielle tant d'humidité que d'oxygène.

5. Un procédé pour la fabrication d'une solution d'hydrocarbure d'un composé d'alkylsodium non complexé, comprenant

(a) une réaction de sodium métallique avec un halogénure d'alkyle de la formule

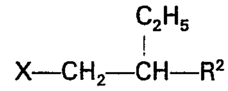

où X est halogène et $R^2$ est $C_2$—$C_6$ alkyle à chaîne droite, dans la présence d'un solvant d'hydrocarbure aliphatique ou alicyclique saturé de 5—10 atomes de carbone, pour produire un liquide homogène et des solides, et

(b) une séparation de ce liquide homogène de ces solides, les deux étapes étant effectuées dans l'absence substantielle tant d'humidité que d'oxygène.

6. Un procédé selon les revendications 4 ou 5, dans laquel X est chlore.

7. Un procédé selon les revendications 4 ou 5, dans lequel le rapport molaire sodium/halogénure d'alkyle dans l'étape (a) est au moins 2.1:1.

8. Un procédé selon les revendications 4 ou 5, dans lequel le sodium métallique de l'étape (a) est une poudre finement pulvérisée ayant une dimension granulométrique moyenne de 50 $\mu$m (microns) ou moins.

9. Un procédé selon les revendications 4 ou 5, dans lequel l'étape (a) est effectuée à une température entre −20°C et 30°C.